# EUROPÄISCHE PATENTSCHRIFT

(11) **EP 3 757 333 B1**
(45) Veröffentlichungstag und Bekanntmachung des Hinweises auf die Patenterteilung: **19.07.2023**
(21) Anmeldenummer: 20165476.1
(22) Anmeldetag: 25.03.2020
(51) Int. Cl.: E05F 15/603

(54) **ANTRIEB FÜR EINEN FLÜGEL EINER TÜR ODER EINES FENSTERS**
DRIVE FOR A LEAF OF A DOOR OR WINDOW
ENTRAÎNEMENT POUR UN BATTANT D'UNE PORTE OU D'UNE FENÊTRE

(30) Priorität: 25.06.2019 DE 102019209143
(43) Veröffentlichungstag der Anmeldung: 30.12.2020
(73) Patentinhaber: GEZE GmbH, 71229 Leonberg (DE)
(72) Erfinder: Augenstein, Joachim, 75223 Niefern-Öschelbronn (DE)

(56) Entgegenhaltungen:
- WO-A1-01/11173
- WO-A1-02/072380
- WO-A1-2007/102545
- WO-A1-2011/098594
- DE-A1- 3 502 774

## Beschreibung

Die vorliegende Erfindung betrifft ein Tür- oder Fenstersystem mit einem Tür- oder Fensterflügel und einem Antrieb für den Flügel, mit einem Antriebsgehäuse, einem Motor, welcher eine Motorwelle umfasst, einer im Antriebsgehäuse angeordneten Antriebsspindel und einem Untersetzungsgetriebe zwischen Motorwelle und Antriebsspindel, welches wenigstens ein mit der Motorwelle gekoppeltes Eingangselement und ein mit der Antriebsspindel gekoppeltes Ausgangselement umfasst.

Die WO 01/11173 A1 offenbart ein Türsystem mit einem Antrieb, einem Motor und einem Untersetzungsgetriebe. Weiteren Stand der Technik bilden die WO 02/072380 A1, die WO 2007/102545 A1 und die WO 2011/098594 A1.

Zum Beispiel bei Türantrieben ist es häufig nötig, die vergleichsweise hohen Drehzahlen des Antriebsmotors durch ein Untersetzungsgetriebe den Gegebenheiten des Türantriebs anzupassen.

Es ist eine Aufgabe der Erfindung einen Antrieb der eingangs genannten Art bereitzustellen, der kostengünstig herzustellen ist und/oder einen geringen Bauraum aufweist.

Die Aufgabe wird durch System nach Anspruch 1 gelöst und insbesondere dadurch, dass zumindest ein statisches Element des Getriebes im Antriebsgehäuse angeordnet ist.

Hierdurch kann der Antrieb besonders kompakt ausgebildet werden. Außerdem entfallen Kosten für ein sonst übliches, zusätzliches Getriebegehäuse.

Das statische Element kann beispielsweise ein Hohlrad eines Planetengetriebes oder ein statischer Lagerring eines Lagerelements sein.

Insbesondere kann das Getriebe vollständig im Antriebsgehäuse angeordnet sein. Hierdurch entfalten sich die erfindungsgemäßen Vorteile in besonderem Maße.

Gemäß einer Ausführungsform ist vorgesehen, dass das Getriebe ein Planetengetriebe umfasst oder ist. Dieses erlaubt einen guten Untersetzungsgrad und insbesondere eine axial besonders kurze Baulänge.

Insbesondere kann das Ausgangselement einen Planetenträger umfassen. Das Eingangselement kann beispielsweise ein Sonnenrad umfassen.

Gemäß einer weiteren Ausführungsform ist vorgesehen, dass ein statisches Element des Getriebes mit dem Antriebsgehäuse direkt fest verbunden ist. Dies trägt ebenfalls vorteilhaft zur Kosten- und Bauraumeinsparung bei. Das statische Element kann beispielsweise ein Hohlrad eines Planetengetriebes sein. Insbesondere kann das statische Element in das Antriebsgehäuse eingepresst sein.

Erfindungsgemäß ist der Motor in einem vom Antriebsgehäuse separaten Motorgehäuse angeordnet sein. Dieses Motorgehäuse kann beispielsweise in axialer Fortführung des Antriebsgehäuses angeordnet sein und/oder an dem Antriebsgehäuse angeflanscht sein.

Das Antriebsgehäuse kann insbesondere zur festen Anbringung am Flügel oder an einem Rahmen ausgebildet sein. Bevorzugt kann das Antriebsgehäuse in Bezug auf Flügel bzw. Rahmen vollkommen unbeweglich angeordnet oder anordenbar sein. Generell bevorzugt kann das Untersetzungsgetriebe, insbesondere Planetengetriebe, einstufig ausgebildet sein.

Erfindungsgemäß weisen das Ausgangselement und die Antriebsspindel eine gemeinsame Lagerung auf. Bei einer Ausführungsform ist vorgesehen, dass das Eingangselement und die Motorwelle eine gemeinsame Lagerung aufweisen.

Die gemeinsame Lagerung spart axialen Bauraum ein. Der sonst nötige Bauraum für die eigenständige Lagerung der Getriebeelemente kann entfallen. Gleichzeitig begünstigt diese Maßnahme, dass das Untersetzungsgetriebe, zumindest mit einem statischen Element, in einem gemeinsamen Gehäuse mit der Antriebsspindel bzw. einem Antriebsgehäuse angeordnet werden kann. Hierdurch werden weiter Bauraum und Bauteile und damit Kosten eingespart.

Vorteilhafterweise können das Ausgangselement und die Antriebsspindel direkt miteinander drehfest verbunden sein. Es ist also insbesondere zwischen Ausgangselement und Antriebsspindel keine Ausgleichskupplung vorgesehen. Dies spart weiter Bauraum und Kosten ein. Insbesondere können das Ausgangselement und die Antriebsspindel zur vorteilhaften Aufnahme von Querkräften auch schubfest miteinander verbunden sein.

Ferner können das Ausgangselement und/oder die Antriebsspindel bevorzugt Mittel zur Befestigung des Ausgangselements und der Antriebsspindel, insbesondere direkt, aneinander aufweisen. Die Mittel können insbesondere korrespondierend an beiden Teilen ausgebildet sein und/oder ineinander eingreifen. Insbesondere kann die Verbindung frei von separaten Befestigungselementen sein. Generell vorteilhaft können das Ausgangselement und die Antriebsspindel auch einteilig ausgebildet bzw. miteinander einteilig verbunden sein.

Bei einer Ausführungsform ist vorgesehen, dass das Ausgangselement mit der Antriebsspindel verschraubt ist, insbesondere mittels eines am Ausgangselement oder an der Antriebsspindel angeformten Gewindevorsprungs. Hierdurch können weiter Bauteile und Bauraum eingespart werden.

Besonders wenig Bauraum erfordert eine Ausführungsführungsform, bei der das Ausgangselement mit der Antriebsspindel derart verbunden ist, dass ein, insbesondere innerer, Lagerring, insbesondere der gemeinsamen Lagerung, zwischen dem Ausgangselement und der Antriebsspindel oder einem hierauf angeordneten Bauteil verspannt ist. Zusätzliche Positionierungsbauteile für den Lagerring können entfallen und Ausgangselement und Antriebsspindel sind vorteilhaft fest verbunden.

Generell sind die im Hinblick auf die Kopplung von Ausgangselement und Antriebsspindel beschriebenen Ausführungsformen auch bei der Kopplung von Eingangselement und Motorwelle einsetzbar.
- Fig. 1: zeigt einen Längsschnitt eines Abschnitts eines Antriebsgehäuses.
- Fig. 2: zeigt einen Querschnitt des Antriebsgehäuses entlang der in Fig. 1 angedeuteten Schnittebene B-B.

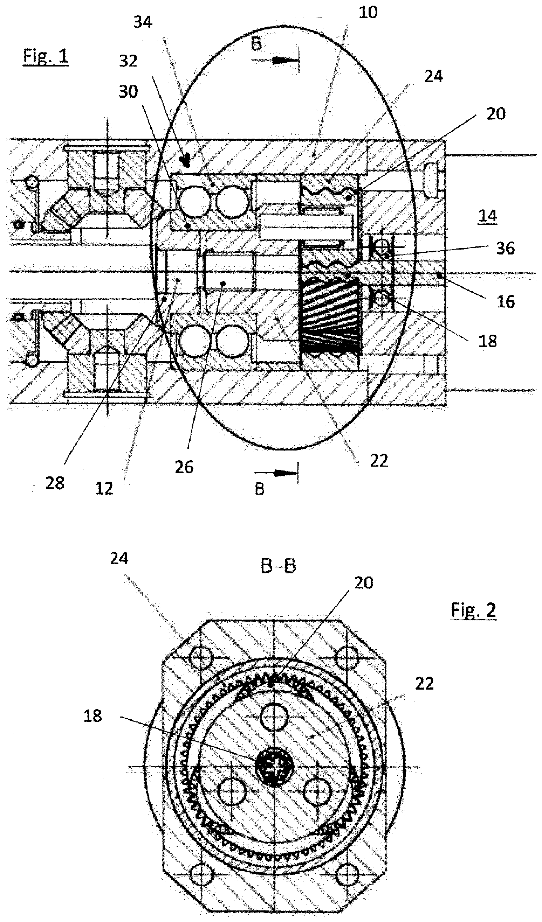

In Fig. 1 ist ein Antriebsgehäuse 10 eines Antriebs für einen nicht dargestellten Tür- oder Fensterflügel gezeigt. Im Antriebsgehäuse 10 ist eine Antriebsspindel 12 angeordnet, die zur Übertragung einer Antriebsbewegung an den Flügel, beispielsweise über ein Gestänge, vorgesehen ist.

Am Antriebsgehäuse 10 ist in dessen axialer Fortführung ein Motor 14 mit separatem Motorgehäuse befestigt. Eine Motorwelle 16 des Motors 14 erstreckt sich von dem Motor 14 hinein in das Antriebsgehäuse 10. Die Motorwelle 16 weist eine Verzahnung auf, die ein Sonnenrad 18 eines Planetengetriebes bildet. Das Planetengetriebe bildet ein Untersetzungsgetriebe und verbindet die Motorwelle 16 mit der Antriebsspindel 12. Das Planetengetriebe umfasst neben dem Sonnenrad 18 einen Satz von Planetenrädern 20, die auf einem Planetenträger 22 gelagert sind, sowie ein Hohlrad 24. Der Aufbau des Planetengetriebes ist im in Fig. 2 dargestellten Querschnitt noch besser sichtbar.

Das Hohlrad 24 ist direkt mit dem Antriebsgehäuse 10 fest verbunden, beispielsweise in dieses eingepresst. Das Hohlrad 24 bleibt somit im Betrieb statisch und bildet ein statisches Element des Getriebes.

Der Planetenträger 22 bildet ein Ausgangselement des Getriebes, das Sonnenrad 18 bildet ein Eingangselement. Der Planetenträger 22 bzw. das Ausgangselement ist direkt mit der Antriebsspindel 12 drehfest verbunden, und zwar in dieser Ausführungsform über einen an der Antriebsspindel angeformten Gewindezapfen 26, der in ein Innengewinde des Planetenträgers 22 eingreift.

Zwischen dem Planetenträger 22 und einem auf der Antriebsspindel 12 sitzenden Bauteil 28 ist ein innerer Lagerring 30 eines Lagerelements 32 angeordnet. Das Lagerelement 32 umfasst außerdem einen statisch angeordneten, äußeren Lagerring 34. Das Lagerelement 32 ist hier vorteilhaft als zweireihiges Schrägkugellager ausgebildet. Der innere Lagerring 30 ist zwischen dem Bauteil 28 und dem Planetenträger 22 verspannt. Der Lagerring 30 ist hierdurch fest mit dem Bauteil 28 bzw. der Antriebsspindel 12 und mit dem Planetenträger 22 verbunden.

Das Lagerelement 32 bildet eine gemeinsame Lagerung für das Ausgangselement des Untersetzungsgetriebes, hier den Planetenträger 22, und die Antriebsspindel 12. Anhand von Fig. 1 ist erkennbar, dass hierdurch besonders wenig axialer Bauraum nötig ist, insbesondere im Vergleich zu einer jeweils eigenständigen Lagerung von Ausgangselement und Antriebsspindel mit separaten Lagerelementen oder gar mit einer Ausgleichskupplung.

Mit ähnlichen Vorteilen ist auch eine gemeinsame Lagerung von Motorwelle 16 und Eingangselement bzw. Sonnenrad 18 vorgesehen, nämlich durch ein weiteres Lagerelement 36. Hier sind die Motorwelle 16 und das Eingangselement bzw. das Sonnenrad 18 einteilig ausgebildet, wobei aber auch eine mehrteilige Ausgestaltung möglich wäre, beispielsweise mit einer Verbindung, die derjenigen von Antriebsspindel 12 und Ausgangselement bzw. Planetenträger 22 entspricht.

Durch die erfindungsgemäße Bauweise und Verwendung bzw. Mehrfachnutzung der Bauteile ist ein besonders kompakter Türantrieb herstellbar, wie er beispielsweise in den Fig. 1 und 2 erkennbar ist. Durch Reduzierung von Bauteilen ist der Antrieb insgesamt besonders günstig in der Herstellung.

### Bezugszeichenliste

- 10: Antriebsgehäuse
- 12: Antriebsspindel
- 14: Motor
- 16: Motorwelle
- 18: Sonnenrad
- 20: Planetenrad
- 22: Planetenträger
- 24: Hohlrad
- 26: Gewindezapfen
- 28: Bauteil
- 30: innerer Lagerring
- 32: Lagerelement
- 34: äußerer Lagerring
- 36: Lagerelement

## Patentansprüche

1. Tür- oder Fenstersystem mit einem Tür- oder Fensterflügel und einem Antrieb für den Flügel, mit
einem Antriebsgehäuse (10),
einem Motor (14), welcher eine Motorwelle (16) umfasst,
einer im Antriebsgehäuse (10) angeordneten Antriebsspindel (12) und einem Untersetzungsgetriebe (18, 20, 22, 24) zwischen Motorwelle (16) und Antriebsspindel (12), welches wenigstens ein mit der Motorwelle (16) gekoppeltes Eingangselement (18) und ein mit der Antriebsspindel (12) gekoppeltes Ausgangselement (22) umfasst,
wobei zumindest ein statisches Element (24, 34) des Getriebes im Antriebsgehäuse (10) angeordnet ist,
wobei der Motor (14) in einem separaten Motorgehäuse angeordnet ist, und wobei das Ausgangselement (22) und die Antriebsspindel (12) eine gemeinsame Lagerung (32) aufweisen.

2. System nach Anspruch 1,
**dadurch gekennzeichnet,**
**dass** das Getriebe vollständig im Antriebsgehäuse (10) angeordnet ist.

3. System nach Anspruch 1 oder 2,
**dadurch gekennzeichnet,**
**dass** das Getriebe ein Planetengetriebe umfasst.

4. System nach Anspruch 3,
**dadurch gekennzeichnet,**
**dass** das Ausgangselement einen Planetenträger (22) umfasst.

5. System nach Anspruch 3 oder 4,
**dadurch gekennzeichnet,**
**dass** das Eingangselement ein Sonnenrad (18) umfasst.

6. System nach einem der vorstehenden Ansprüche,
**dadurch gekennzeichnet,**
**dass** ein statisches Element (24, 34) des Getriebes, insbesondere das Hohlrad (24) eines Planetengetriebes, mit dem Antriebsgehäuse (10) direkt fest verbunden ist.

7. System nach einem der vorstehenden Ansprüche,
wobei das Eingangselement (18) und die Motorwelle (16) eine gemeinsame Lagerung (36) aufweisen.

8. System nach einem der vorstehenden Ansprüche,
**dadurch gekennzeichnet,**
**dass** das Ausgangselement (22) und die Antriebsspindel (12) direkt miteinander drehfest verbunden sind.

9. System nach einem der vorstehenden Ansprüche,
**dadurch gekennzeichnet,**
**dass** das Ausgangselement (22) und/oder die Antriebsspindel (12) Mittel (26) zur Befestigung des Ausgangselements (22) und der Antriebsspindel aneinander aufweisen oder dass das Ausgangselement (22) und die Antriebsspindel (12) einteilig ausgebildet sind.

10. System nach einem der vorstehenden Ansprüche,
**dadurch gekennzeichnet,**
**dass** das Ausgangselement (22) mit der Antriebsspindel (12) verschraubt ist, insbesondere mittels eines am Ausgangselement (22) oder an der Antriebsspindel (12) angeformten Gewindevorsprungs (26).

11. System nach einem der vorstehenden Ansprüche,
**dadurch gekennzeichnet,**
**dass** das Ausgangselement (22) mit der Antriebsspindel (12) derart verbunden ist, dass ein Lagerring (30), insbesondere der gemeinsamen Lagerung (32), zwischen dem Ausgangselement (22) und der Antriebsspindel (12) oder einem hierauf angeordneten Bauteil (28) verspannt ist.

## Claims

1. Door or window system having a door or window leaf and a drive for the leaf, having
a drive housing (10);
a motor (14) which comprises a motor shaft (16);
a drive spindle (12) which is disposed in the drive housing (10), and
a reduction gearbox (18, 20, 22, 24) which is between the motor shaft (16) and the drive spindle (12) and comprises at least one input element (18) coupled to the motor shaft (16), and an output element (22) coupled to the drive spindle (12); wherein at least one static element (24, 34) of the gearbox is disposed in the drive housing (10); wherein the motor (14) is disposed in a separate motor housing, and wherein the output element (22) and the drive spindle (12) have a common mounting (32) .

2. System according to Claim 1,
**characterized in that**
the gearbox is disposed completely in the drive housing (10).

3. System according to Claim 1 or 2,
**characterized in that**
the gearbox comprises a planetary gearbox.

4. System according to Claim 3,
**characterized in that**
the output element comprises a planet carrier (22).

5. System according to Claim 3 or 4,
**characterized in that**
the input element comprises a sun gear (18).

6. System according to one of the preceding claims,
**characterized in that**
a static element (24, 34) of the gearbox, in particular the ring gear (24) of a planetary gearbox, is fixedly connected directly to the drive housing (10).

7. System according to one of the preceding claims, wherein the input element (18) and the motor shaft (16) have a common mounting (36).

8. System according to one of the preceding claims,
**characterized in that**
the output element (22) and the drive spindle (12) are co-rotationally connected directly to one another.

9. System according to one of the preceding claims,
**characterized in that**
the output element (22) and/or the drive spindle (12) have means (26) for fastening the output element (22) and the drive spindle to one another, or **in that** the output element (22) and the drive spindle (12) are integrally configured.

10. System according to one of the preceding claims,
**characterized in that**
the output element (22) is screwed to the drive spindle (12), in particular by means of a threaded protrusion (26) integrally moulded on the output element (22) or on the drive spindle (12).

11. System according to one of the preceding claims,
**characterized in that**
the output element (22) is connected to the drive spindle (12) in such a manner that a bearing ring (30), in particular of the common mounting (32), is braced between the output element (22) and the drive spindle (12) or a component (28) disposed thereon.

## Revendications

1. Système de porte ou de fenêtre ayant un battant d'une porte ou d'une fenêtre et un entraînement pour le battant, comprenant
un boîtier d'entraînement (10),
un moteur (14) qui comprend un arbre moteur (16),
une broche d'entraînement (12) agencée dans le boîtier d'entraînement (10) et un engrenage réducteur (18, 20, 22, 24) entre l'arbre moteur (16) et la broche d'entraînement (12), qui comprend au moins un élément d'entrée (18) relié à l'arbre moteur (16) et un élément de sortie (22) relié à la broche d'entraînement (12), au moins un élément statique (24, 34) du réducteur étant agencé dans le boîtier d'entraînement (10),
dans lequel le moteur (14) est agencé dans un boîtier de moteur séparé, et dans lequel l'élément de sortie (22) et la broche d'entraînement (12) présentent un palier commun (32).

2. Système selon la revendication 1,
**caractérisé**
**en ce que** le réducteur est entièrement agencé dans le boîtier d'entraînement (10).

3. Système selon la revendication 1 ou 2,
**caractérisé**
**en ce que** le réducteur comprend un engrenage planétaire.

4. Système selon la revendication 3,
**caractérisé**
**en ce que** l'élément de sortie comprend un support de planétaire (22).

5. Système selon la revendication 3 ou 4,
**caractérisé**
**en ce que** l'élément d'entrée comprend un pignon solaire (18) .

6. Système selon l'une quelconque des revendications précédentes,
**caractérisé**
**en ce qu'**un élément statique (24, 34) du réducteur, notamment la couronne (24) d'un engrenage planétaire, est directement solidaire du boîtier d'entraînement (10).

7. Système selon l'une des revendications précédentes, dans lequel l'élément d'entrée (18) et l'arbre moteur (16) présentent un palier commun (36).

8. Système selon l'une des revendications précédentes, **caractérisé en ce que**
l'élément de sortie (22) et la broche d'entraînement (12) sont directement reliés l'un à l'autre de manière solidaire en rotation.

9. Système selon l'une des revendications précédentes, **caractérisé**
**en ce que** l'élément de sortie (22) et/ou la broche d'entraînement (12) comportent des moyens (26) de fixation de l'élément de sortie (22) et de la broche d'entraînement l'un à l'autre ou **en ce que** l'élément de sortie (22) et la broche d'entraînement (12) sont réalisés en une seule pièce.

10. Système selon l'une des revendications précédentes, **caractérisé**
**en ce que** l'élément de sortie (22) est vissé à la broche d'entraînement (12), notamment au moyen d'une saillie filetée (26) formée sur l'élément de sortie (22) ou sur la broche d'entraînement (12).

11. Système selon l'une des revendications précédentes, **caractérisé**
**en ce que** l'élément de sortie (22) est relié à la broche d'entraînement (12) de telle sorte qu'une bague de palier (30), notamment du palier commun (32), est serrée entre l'élément de sortie (22) et la broche d'entraînement (12) ou un composant (28) agencé sur celle-ci.
